(19) Europäisches Patentamt / European Patent Office / Office européen des brevets

(11) EP 2 870 865 A1

(12) EUROPEAN PATENT APPLICATION
published in accordance with Art. 153(4) EPC

(43) Date of publication:
13.05.2015 Bulletin 2015/20

(51) Int Cl.:
*A01K 1/015* (2006.01)

(21) Application number: 13812738.6

(22) Date of filing: 20.06.2013

(86) International application number:
PCT/JP2013/067009

(87) International publication number:
WO 2014/007071 (09.01.2014 Gazette 2014/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 06.07.2012 JP 2012153083

(71) Applicant: UNI-CHARM CORPORATION
Shikokuchuo-shi
Ehime 799-0111 (JP)

(72) Inventors:
• TAKAGI, Chiyo
  Kanonji-shi, Kagawa 769-1602 (JP)
• IKEGAMI, Takeshi
  Kanonji-shi, Kagawa 769-1602 (JP)

(74) Representative: Peter, Julian
Staeger & Sperling
Partnerschaftsgesellschaft mbB
Sonnenstrasse 19
80331 München (DE)

(54) SHEET FOR PETS

(57) To provide a technology capable of preventing the spread of excrement in a sheet surface. [Solution] A sheet (10) for pets, comprising an absorbent body (20), a surface sheet (30), and a rear surface sheet (40). The absorbent body (20) has a first absorbent layer (21), a second absorbent layer (22), a surface-side covered sheet (23), and a rear-side covered sheet (24). The first absorbent layer (21) is formed by hydrophilic fibers including a cationic surfactant and the second absorbent layer (22) is formed by a water-absorbent resin.

FIG. 2

**Description**

TECHNICAL FIELD

The present invention relates to a sheet for pets which is used to dispose of excrement of pets such as dogs and cats, or more particularly to a sheet for pets which can prevent diffusion of excrement in a sheet surface.

BACKGROUND ART

As a sheet for pets which is used to dispose of excrement (especially urine) of pets such as dogs and cats, for example, a pet sheet disclosed in patent document 1 is well known. The pet sheet disclosed in patent document 1 has a liquid-permeable top sheet, a liquid-impermeable back sheet, and an absorber that is disposed between the top sheet and the back sheet. The absorber is formed of hydrophilic fibers such as pulp and absorbent resin such as highly absorbent polymer.

Pets tend to hate excreting on a wet place. Further, it is not known where pets excrete on a pet sheet.

Therefore, in order to provide a pet sheet on which pets can excrete several times, it is necessary to prevent excrement excreted on the pet sheet from diffusing in the sheet surface (to narrow the diffusion area).

For this purpose, in the pet sheet disclosed in patent document 1, a hydrophobizing agent (higher aliphatic alcohol or higher aliphatic amine) having higher affinity for hydrophilic fibers than absorbent resin is contained in an absorbent layer.

Thus, in the pet sheet disclosed in patent document 1, the hydrophilic fibers can be imparted with hydrophobicity while the absorbability of the absorbent resin is kept, so that excrement can be prevented from diffusing in the sheet surface.

PRIOR ART DOCUMENT

PATENT DOCUMENT

Patent Document 1: JP 2011-205984 A

SUMMARY OF THE INVENTION

PROBLEM TO BE SOLVED BY THE INVENTION

Inventors have intensively studied on a technique for preventing excrement absorbed in an absorbent layer from diffusing in the sheet surface. As a result, they found that excrement absorbed in the absorbent layer can also be prevented from diffusing in the sheet surface by using agents other than higher aliphatic alcohol or higher aliphatic amine disclosed in patent document 1.

Accordingly, it is an object of the present invention to provide a novel technique for preventing excrement absorbed in an absorbent layer from diffusing in a sheet surface.

MEANS FOR SOLVING THE PROBLEM

A sheet for pets according to the present invention has a liquid-permeable top sheet, a liquid-impermeable back sheet, and an absorber that is disposed between the top sheet and the back sheet and absorbs excrement which has penetrated the top sheet. The sheet for pets according to this invention is configured such that the top sheet receives excrement of pets with the back sheet placed on an intended place such as floor.

In this invention, the absorber has an absorbent layer which is formed of hydrophilic fibers containing a cationic surfactant. As the hydrophilic fibers, for example, pulp or rayon is used. As the cationic surfactant, for example, amine salt, quaternary ammonium salt, benzalkonium salt, benzethonium chloride, pyridinium salt, imidazolium salt or a polyamide derivative can be used. The hydrophilic fibers are imparted with hydrophobicity by the cationic surfactant. The cationic surfactant is chemically bonded to the hydrophilic fibers, so that the cationic surfactant can be prevented from being separated from the hydrophilic fibers by excrement. Further, preferably, the absorbent layer includes absorbent resin.

In this invention, since the cationic surfactant which imparts hydrophobicity to the hydrophilic fibers is not separated from the hydrophilic fibers by excrement, the hydrophilic fibers can be kept in a state of having desired hydrophobicity for a long period of time. Further, excrement absorbed in the absorbent layer is prevented from spreading (diffusing) within the absorbent layer and thus from diffusing in the sheet surface.

In another aspect of the present invention, as the cationic surfactant which imparts hydrophobicity to the hydrophilic fibers, quaternary ammonium salt is used. By using quaternary ammonium salt, the pet sheet can be imparted with antibacterial properties.

In another aspect of the present invention, pulp is used as the hydrophilic fibers.

In another aspect of the present invention, the hydrophilic fibers forming the absorbent layer have a sedimentation speed of 5 seconds or longer.

In order to measure the "sedimentation speed", a cylindrical body is formed by using 5 gram of hydrophilic fibers containing a cationic surfactant, and the cylindrical body is dropped sideways into a container having a depth of 400 mm and containing water, from the height of 10 mm above the water surface. Then the time the cylindrical body takes to sink down under the water surface after contact with the water surface is measured and used as the "sedimentation speed".

By provision of the absorbent layer having a sedimentation speed of 5 seconds or longer, diffusion of excrement in the sheet surface which is caused by diffusion of the excrement within the absorbent layer can be further prevented.

In another aspect of the present invention, the absorbent layer is formed of hydrophilic fibers containing a cationic surfactant and absorbent resin.

In another aspect of the present invention, the absorbent layer includes a first absorbent layer formed of hydrophilic fibers containing a cationic surfactant, and a second absorbent layer formed of absorbent resin.

In another aspect of the present invention, the second absorbent layer is disposed on a side of the first absorbent layer facing the top sheet.

When the absorbent layer has the first absorbent layer formed of hydrophilic fibers containing a cationic surfactant and the second absorbent layer formed of absorbent resin, it is preferable that the second absorbent layer has a higher liquid absorption speed.

In another aspect of the present invention, the second absorbent layer has a liquid absorption speed by the vortex method of 18 seconds or shorter.

The second absorbent layer may be formed of an absorbent resin having a desired liquid absorption speed, or it may be formed by combining a plurality of absorbent resins having different liquid absorption speeds such that the second absorbent layer has a desired liquid absorption speed as a whole.

In this aspect, diffusion of excrement in the sheet surface which is caused by diffusion of the excrement within the first absorbent layer can be further prevented.

EFFECT OF THE INVENTION

According to the present invention, excrement absorbed in the absorbent layer can be prevented from spreading (diffusing) within the absorbent layer and thus from diffusing in the sheet surface.

BRIEF DESCRIPTION OF THE DRAWINGS

FIG. 1 is a perspective view showing a sheet for pets according to the present invention.
FIG. 2 is a sectional view taken along line II-II in FIG. 1.
FIG. 3 is a view for illustrating operation of a sheet for pets according to an embodiment of the invention.
FIG. 4 is a sectional view showing another embodiment of the invention.
FIG. 5 is a view for illustrating operation of a prior art sheet for pets.

REPRESENTATIVE EMBODIMENT FOR CARRYING OUT THE INVENTION

Embodiments of the present invention are now described with reference to the accompanying drawings.

The detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention.

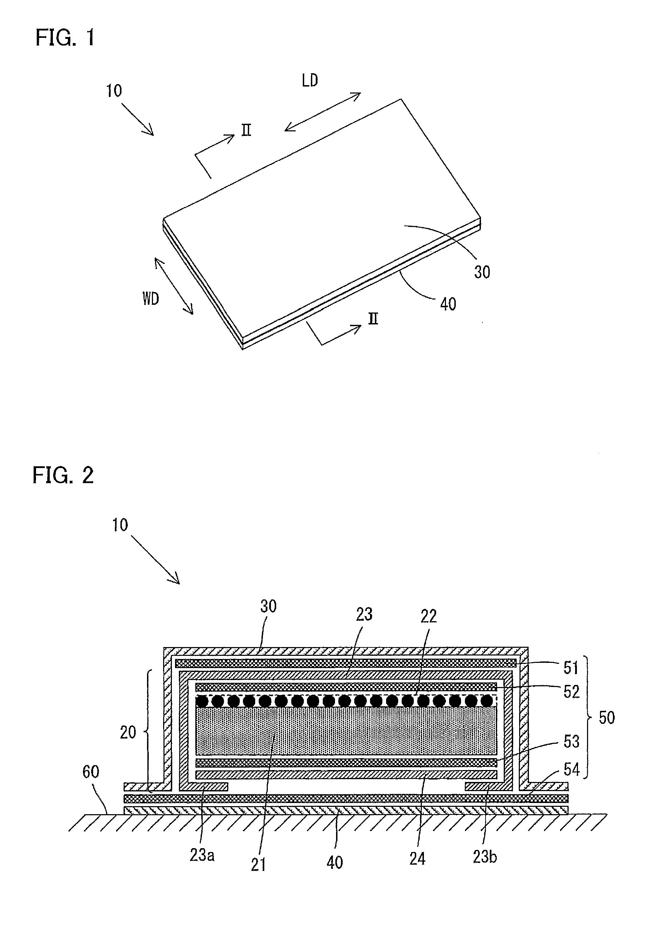

A pet sheet 10 according to an embodiment of the invention is shown in FIGS. 1 and 2. FIG. 1 is a perspective view showing the pet sheet 10 of this embodiment, and FIG. 2 is a sectional view taken along line II-II in FIG. 1.

As shown in FIG. 1, the pet sheet 10 has a rectangular shape having a long side along a longitudinal direction LD and a short side along a width direction WD. The pet sheet 10 may also be formed into various other shapes.

The pet sheet 10 has an absorber 20, a top sheet 30 and a back sheet 40. The absorber 20 is disposed between the top sheet 30 and the back sheet 40 and covered by the top sheet 30 and the back sheet 40. The pet sheet 10 is placed on an intended place (e.g. floor 60) such that the top sheet 30 receives excrement. Specifically, the back sheet 40, the absorber 20 and the top sheet 30 are stacked one on another in the vertical direction.

The top sheet 30 has liquid permeability to allow penetration of liquid (such as urine) contained in excrement. It is sufficient for the top sheet 30 to have liquid permeability, and the top sheet 30 may be formed, for example, of nonwoven fabric, such as thermal bond nonwoven fabric, point-bond nonwoven fabric, air-through nonwoven fabric, spun-lace nonwoven fabric and spun-bond nonwoven fabric.

The back sheet 40 has liquid impermeability or repellency to block or prevent penetration of liquid contained in excrement. It is sufficient for the back sheet 40 to have liquid impermeability, and the back sheet 40 may be formed, for example, of resin film such as a film of polyethylene, polypropylene or polyethylene terephthalate. For example, a polyethylene film having a basis weight of 17 $g/m^2$ may be used. Alternatively, nonwoven fabric with a water repellent applied thereto may also be used as the back sheet 40. The "$g/m^2$" here represents a gram per square meter which measures basis weight.

The top sheet 30 and the back sheet 40 are shaped to cover the absorber 20 and are bonded together at their peripheral edges while covering the absorber 20.

The absorber 20 includes an absorbent layer, a top side covering sheet 23 and a back side covering sheet 24.

The absorbent layer has a first absorbent layer (also referred to as an "absorber core") 21 formed of hydrophilic fibers and a second absorbent layer (also referred to as a "dispersed layer") 22 formed of absorbent resin. The second absorbent layer 22 is disposed on a side (upper side) of the first absorbent layer 21 facing the top sheet 30.

The first absorbent layer 21 is typically formed by stacking hydrophilic fibers so as to have a basis weight of about 60 $g/m^2$. As the hydrophilic fibers, for example, fluff pulp may be used.

The second absorbent layer 22 is typically formed by spraying absorbent resin onto an upper surface of the first absorbent layer 21 (facing the top sheet 30) so as to have a basis weight of 40 $g/m^2$. As the absorbent resin, for example, highly absorbent polymer (also referred to as "SAP") may be used. When the absorbent resin is uniformly sprayed onto the upper surface of the first absorbent layer 21 formed of hydrophilic fibers, the absorbent resin may penetrate between hydrophilic fibers, so that the first and second absorbent layers 21, 22 may not be completely separated from each other.

The absorbent layer is disposed between the top side covering sheet 23 and the back side covering sheet 24 and is covered by the covering sheets 23, 24. The top side covering sheet 23 is disposed on a side (upper side) of the absorbent layer facing the top sheet 30, and the back side covering sheet 24 is disposed on a side (lower side) of the absorbent layer facing the back sheet 40.

The top side covering sheet 23 and the back side covering sheet 24 are typically formed of a tissue of conifer pulp (e.g. a tissue having a basis weight of 12 to 25 $g/m^2$).

In this embodiment, in order to wrap the absorbent layer with the top side covering sheet 23 and the back side covering sheet 24, both edges 23a, 23b of the top side covering sheet 23 are bent and disposed on a lower side (facing the back sheet 40) of edges of the back side covering sheet 24.

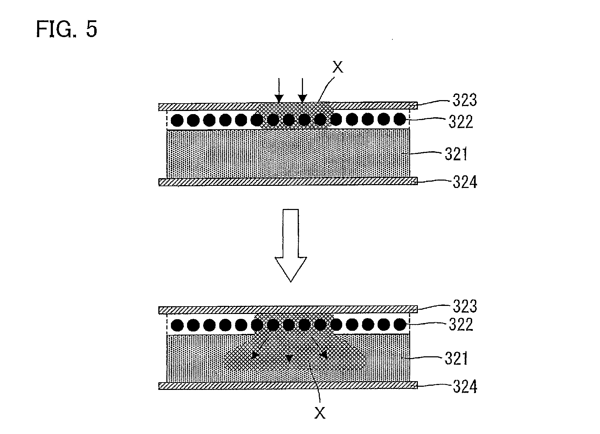

Operation of a sheet for pets where the first absorbent layer 21 is formed of pulp, for example, by evenly stacking fluff pulp so as to have a basis weight of 60 $g/m^2$ is now described with reference to FIG. 5.

(1) When a pet excretes on the pet sheet, excrement (urine) X penetrates through a top sheet and a top side covering sheet 323 and is then first absorbed by absorbent resin having a high absorption speed in a second absorbent layer 322.
(2) Excrement X which could not be absorbed by the absorbent resin of the second absorbent layer 322 enters a first absorbent layer 321. The first absorbent layer 321 is formed of pulp which does not repel excrement, so that excrement which has entered the first absorbent layer 321 spreads downward and outward within the first absorbent layer 321. When the excrement X spreads outward within the first absorbent layer 321, it returns to the top sheet side. Consequently, the excrement X diffuses in the sheet surface.

As described above, since pets hate excreting on a wet place, if excrement diffuses in a sheet surface, the number of times of excreting on one sheet decreases. Further, if excrement diffuses in the sheet surface, excrement may leak out through edges of the sheet. Furthermore, if a pet steps on the sheet surface in which excrement has diffused, paws of the pet get wet, and if the pet runs around a house with the wet paws, the entire house may be contaminated.

In the pet sheet disclosed in patent document 1, by provision of the absorbent layer which contains a hydrophobizing agent having higher affinity for hydrophilic fibers than absorbent resin, such as higher aliphatic alcohol and higher aliphatic amine, excrement absorbed in the absorbent layer is prevented from diffusing within the absorbent layer.

In this embodiment, the first absorbent layer 21 is formed of hydrophilic fibers containing a surfactant, particularly a cationic surfactant, which imparts hydrophobicity to hydrophilic fibers.

The cationic surfactant is chemically bonded to the hydrophilic fibers, so that the cationic surfactant is not separated from the hydrophilic fibers by excrement. Therefore, the hydrophilic fibers can be kept in a state of having desired hydrophobicity for a long period of time.

As the cationic surfactant, amine salt, quaternary ammonium salt, benzalkonium salt, benzethonium chloride, pyridinium salt, imidazolium salt, a polyamide derivative, etc. can be used. Particularly by using quaternary ammonium salt, the pet sheet can be imparted with antibacterial properties by the antibacterial properties of quaternary ammonium salt.

As the hydrophilic fibers, wood pulp of broadleaf trees and conifers or pulp of herbaceous plants can be used. Among them, it is preferable to use fluff pulp having a long fiber length.

In this embodiment, the first absorbent layer 21 is formed of treated pulp formed by evenly stacking fluff pulp so as to have a basis weight of 60 g/m$^2$ and containing a cationic surfactant.

The sedimentation speed of the treated pulp (the first absorbent layer 21) is set to be 5 seconds or longer.

The sedimentation speed is measured as follows.

(1) 5 gram of treated pulp is evenly stuffed to form a cylindrical body.
(2) Water is poured into a container such as a beaker up to a depth of about 200 mm.
(3) The cylindrical body is gently dropped sideways into the container from the height of 10 mm above the water surface.
(4) The time the cylindrical body takes to sink down under the water surface after contact with the water surface is measured and used as the sedimentation speed.

Preferably, the sedimentation speed of the first absorbent layer 21 is set to be five seconds or longer. By such setting of the sedimentation speed, diffusion of excrement in the sheet surface which is caused by diffusion of the excrement in the first absorbent layer 21 can be effectively prevented.

Such a treated pulp includes FULLY TREATED PULP 4722 GI (made by Georgia Pacific).

In this embodiment, the second absorbent layer 22 is formed by evenly spraying absorbent resin on the upper surface of the first absorbent layer 21 so as to have a basis weight of 40 g/m$^2$.

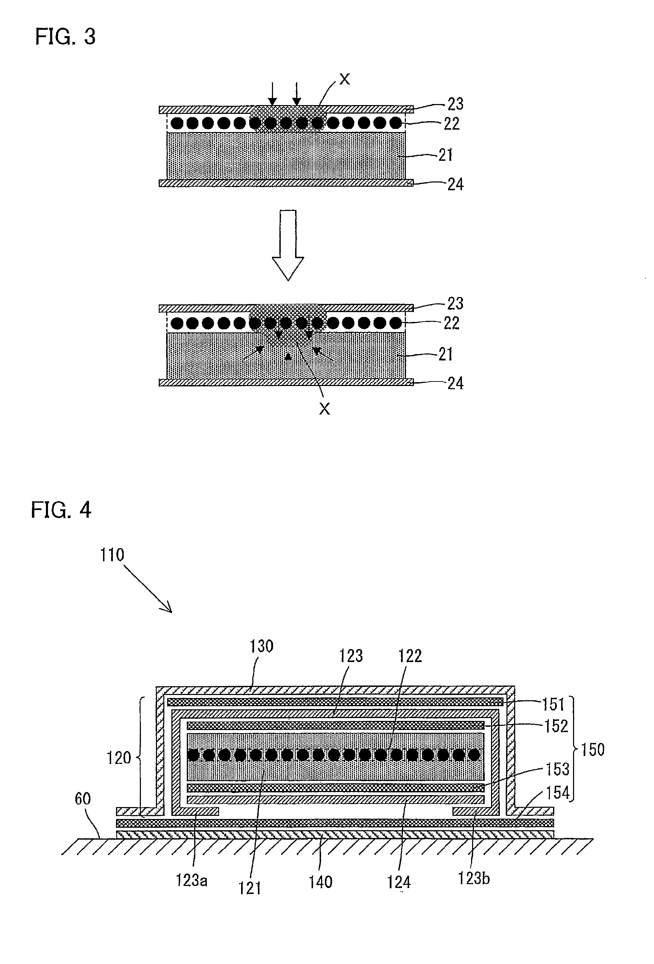

Operation of the pet sheet according to this embodiment is now explained with reference to FIG. 3

(1) When a pet excretes on the pet sheet 10, excrement (urine) X penetrates through the top sheet 30 and the top side covering sheet 23 and is then first absorbed by absorbent resin having a high absorption speed in the second absorbent layer 22.
(2) Excrement X which could not be absorbed by the absorbent resin of the second absorbent layer 22 enters the first absorbent layer 21. Here, in this embodiment, the hydrophilic fibers forming the first absorbent layer 21 are imparted with hydrophobicity by the cationic surfactant. Therefore, the excrement X which has entered the first absorbent layer 21 is repelled by the hydrophilic fibers having hydrophobicity, so that the excrement is prevented from spreading (diffusing) downward and outward within the first absorbent layer 21.
(3) In the state in which the excrement X is prevented from spreading (diffusing) downward and outward within the first absorbent layer 21, the absorbent resin forming the second absorbent layer 22 gradually absorbs the excrement X. Thus, the excrement X can be prevented from diffusing to the sheet surface side.

When the excrement X which has entered the first absorbent layer 21 is thus repelled by the hydrophilic fibers having hydrophobicity and is prevented from spreading downward and outward within the first absorbent layer 21, the excrement X collects in one area. In the case of an absorbent sheet which is worn on a user's body, if excrement X collects in one area, the excrement X is kept in contact with the user's body, which may cause itch or rash on the user's skin. Therefore, such a technique has not been used for absorbent sheets of the type which is worn on a user's body.

On the other hand, the sheet for pets is not worn on the body and is horizontally placed in use (rarely used in an inclined state). Further, it is particularly important to note that pets tend not to excrete on the same (once used) place again and not to excrete on a wet place.

Therefore, in order to increase the number of times of excretion on one sheet, it is more effective to prevent diffusion of excrement in the sheet surface than to prevent leakage of excrement.

If an embossing method is used as a bonding method, a concave-convex part is formed in the bonded region, and forms a part having a high fiber density (high density part) and a part having a low fiber density (low density part) in the bonded region. In this case, excrement spreads (diffuses) along the high density part by capillary action.

When excrement diffuses along a bonded region in which the absorbent layer (the second absorbent layer 22) and the top side covering sheet 23 are bonded and along a bonded region in which the top side covering sheet 23 and the top sheet 30 are bonded, the excrement diffuses in the sheet surface.

Therefore, in this embodiment, the top sheet 30 and the top side covering sheet 23, and the top side covering sheet 23 and the absorbent layer (the second absorbent layer 22) are entirely bonded together (i.e. the top sheet 30 and the absorbent layer are entirely bonded to the top side covering sheet 23) by using a heat sealable adhesive (hot-melt adhesive). The hot-melt adhesive is liquefied by heating and melting and solidified by cooling to form a bonded state. A well-known hot-melt adhesive can be used as the hot-melt adhesive.

In this embodiment, the absorbent layer (the first absorbent layer 21) and the back side covering sheet 24, and the back side covering sheet 24 and the back sheet 40 are also entirely bonded together by using a hot-melt adhesive.

The manner of being "entirely bonded together" means the manner in which the entire surfaces of the top sheet 30 and the top side covering sheet 23 (the top side covering sheet 23 and the absorbent layer) facing each other in the stacking direction (vertical direction) are bonded together. The manner of "entirely bonding together" includes the manner of evenly applying an adhesive over the entire surface of at least one of the surfaces facing each other in the stacking direction (vertical direction), and the manner of applying an adhesive over the entire surface of at least one of the surfaces in a discontinuous pattern such as a spiral, lattice-like, striped or dotted pattern.

A bonded part 50 or bonded parts 51, 52, 53, 54 shown in FIG. 2 are parts in which the top sheet 30 and the top side covering sheet 23 are bonded, the top side covering sheet 23 and the absorbent layer (the second absorbent layer 22) are bonded, the absorbent layer (the first absorbent layer 21) and the back side covering sheet 24 are bonded, and the back side covering sheet 24 and the back sheet 40 are bonded, respectively, by using a hot-melt adhesive.

The absorber can be securely fixed between the top sheet 30 and the back sheet 40 by entirely bonding using a heat sealable adhesive, so that the absorber can be prevented from losing shape.

In this embodiment, the absorbent resin is sprayed on the top of the first absorbent layer 21 formed of hydrophilic fibers, but it may be provided inside the first absorbent layer.

FIG. 4 is a sectional view of a pet sheet 110 according to another embodiment of the present invention.

The pet sheet 110 according to this embodiment is different only in the structure of the absorbent layer of an absorber 120 from the pet sheet 10, and in the other points, it has the same structure as the pet sheet 10. Therefore, only the structure of the absorber 120 is now explained.

The absorber 120 has an absorbent layer 121, a top side covering sheet 123 and a back side covering sheet 124.

The absorbent layer 121 is formed of hydrophilic fibers, and a second absorbent layer 122 formed of absorbent resin is disposed in the first absorbent layer 121. As the hydrophilic fibers forming the absorbent layer 121, the same fibers as the hydrophilic fibers forming the above-described first absorbent layer 21 can be used. Further, as the absorbent resin forming the second absorbent layer 122, the same resin as the absorbent resin forming the above-described second absorbent layer 22 can be used.

The pet sheet 110 according to this embodiment has the same effect as the above-described pet sheet 10.

Next, the effect of preventing diffusion of excrement in the sheet surface is reviewed in relation to use of hydrophilic fibers containing a cationic surfactant and the liquid absorption speed of absorbent resin. The effect of preventing diffusion of excrement in the sheet surface is determined by the liquid diffusion area.

The liquid absorption speed is measured by the following method (vortex method).

(1) 0.9% sodium chloride aqueous solution is adjusted to have a liquid temperature of 25°C.
(2) A rotor is placed in a 100 ml beaker.
(3) 50 g of test liquid is poured into the 100 ml beaker and a stirrer bar is put in the beaker.
(4) The 100 ml beaker is placed on a magnetic stirrer and the rotor is rotated at 600 rpm.
(5) 2 g of absorbent resin (SAP) is put into the beaker and the time it takes for the liquid surface to be stabilized (flattened) is measured.

The liquid diffusion area is calculated by the following method.

(1) A vinyl chloride tube (having an outer diameter of 66.6 mm, an inner diameter of 60.2 mm and a height of 53 mm) is placed on a measurement point (excluding a folded part) of an object sheet.
(2) 40 cc of 0.9% saline is dropped into the center of the vinyl chloride tube from 10 mm above in 6 seconds by using a burette (40 cc/6 sec).
(3) After the elapse of 5 minutes after dropping the saline, the diffusion length of the saline in the MD direction (machine direction) and the diffusion length of the saline in the CD direction (cross direction) are measured.
(4) From the measured diffusion lengths in the CD direction and the MD direction, the liquid diffusion area ($cm^2$) is calculated by using the following formula.

$$[(MD\ direction\ diffusion\ length/2) \times (CD\ direction\ diffusion\ length/2) \times 3.14]$$

As the first absorbent layer and the second absorbent layer disposed on top of the first absorbent layer, the following sheets 1 to 8 are used.

In the sheets 1 to 4, the first absorbent layer is formed of pulp (treated pulp) formed by evenly stacking fluff pulp so as to have a basis weight of 60 g/m$^2$ and containing a cationic surfactant.

In the sheets 5 to 8, the first absorbent layer is formed of pulp (non-treated pulp) formed by evenly stacking fluff pulp so as to have a basis weight of 60 g/m$^2$.

[Sheet 1]

(first absorbent layer) : treated pulp formed by evenly stacking fluff pulp so as to have a basis weight of 60 g/m$^2$, containing a cationic surfactant and having the sedimentation speed of 5 seconds
(second absorbent layer) : absorbent resin (SAP) having a basis weight of 40 g/m$^2$ and having the liquid absorption speed of 4 seconds

[Sheet 2]

(first absorbent layer) : treated pulp formed by evenly stacking fluff pulp so as to have a basis weight of 60 g/m$^2$, containing a cationic surfactant and having the sedimentation speed of 5 seconds
(second absorbent layer) : absorbent resin (SAP) having a basis weight of 40 g/m$^2$ and having the liquid absorption speed of 10 seconds

[Sheet 3]

(first absorbent layer) : the same treated pulp as sheet 1
(second absorbent layer) : absorbent resin (SAP) having a basis weight of 40 g/m$^2$ and having the liquid absorption speed of 18 seconds

[Sheet 4]

(first absorbent layer) : the same treated pulp as sheet 1
(second absorbent layer) : absorbent resin (SAP) having a basis weight of 40 g/m$^2$ and having the liquid absorption speed of 35 seconds

[Sheet 5]

(first absorbent layer) : non-treated pulp formed by evenly stacking fluff pulp so as to have a basis weight of 60 g/m$^2$ and having the sedimentation speed of one second
(second absorbent layer) : absorbent resin (SAP) having a basis weight of 40 g/m$^2$ and having the liquid absorption speed of 4 seconds

[Sheet 6]

(first absorbent layer) : the same non-treated pulp as sheet 4
(second absorbent layer) : absorbent resin (SAP) having a basis weight of 40 g/m$^2$ and having the liquid absorption speed of 10 seconds

[Sheet 7]

(first absorbent layer) : the same non-treated pulp as sheet 4
(second absorbent layer) : absorbent resin (SAP) having a basis weight of 40 g/m$^2$ and having the liquid absorption speed of 18 seconds

[Sheet 8]

(first absorbent layer) ; the same non-treated pulp as sheet 4
(second absorbent layer) : absorbent resin (SAP) having a basis weight of 40 g/m$^2$ and having the liquid absorption speed of 35 seconds

The liquid diffusion areas of the sheets 1 to 8 were measured by the above-described method. The following is the measurement results.

[sheet 1 (treated pulp + liquid absorption speed of 4 seconds)] : 192 $cm^2$
[sheet 2 (treated pulp + liquid absorption speed of 10 seconds)] : 245 $cm^2$
[sheet 3 (treated pulp + liquid absorption speed of 18 seconds)] : 264 $cm^2$
[sheet 4 (treated pulp + liquid absorption speed of 35 seconds)] : 281 $cm^2$
[sheet 5 (non-treated pulp + liquid absorption speed of 4 seconds)] : 207 $cm^2$
[sheet 6 (non-treated pulp + liquid absorption speed of 10 seconds)]: 270 $cm^2$
[sheet 7 (non-treated pulp + liquid absorption speed of 18 seconds)]: 320 $cm^2$
[sheet 8 (non-treated pulp + liquid absorption speed of 35 seconds)]: 341 $cm^2$

From these results, the following can be seen.

When comparing the sheets using absorbent resin having the same liquid absorption speed, the liquid diffusion area (area of diffusion of excrement in the sheet surface) is smaller in the sheet using treated pulp.

For example, when comparing the sheets 3 and 7 using absorbent resin having the liquid absorption speed of 18 seconds, the liquid diffusion area is 264 $cm^2$ in the sheet 3, while it is 320 $cm^2$ in the sheet 7.

This indicates that absorbent resin having a lower liquid absorption speed can be used by forming the first absorbent layer of treated pulp, compared with the sheet having the first absorbent layer formed of non-treated pulp. An absorbent resin having a higher absorption speed is more expensive. Further, an absorbent resin having a lower liquid absorption speed has a higher strength and has less rewet (phenomenon in which excrement absorbed in the absorbent resin returns to the sheet surface side).

From the above, it can be understood that, by forming the first absorbent layer of treated pulp and forming the second absorbent layer of absorbent resin, diffusion of excrement in the sheet surface which is caused by return of excrement absorbed in the absorbent layer to the sheet surface side can be effectively prevented.

Further, judging in terms of the liquid diffusion area (area of diffusion of excrement in the sheet surface) indicating the diffusibility of excrement in the sheet surface which is caused by return of excrement absorbed in the absorbent layer to the sheet surface side, diffusion of excrement in the sheet surface which is caused by such return of excrement to the sheet surface side can be prevented by using the sheets 1 to 3.

Specifically, when the first absorbent layer is formed of treated pulp and the second absorbent layer is formed of absorbent resin, diffusion of excrement in the sheet surface which is caused by return of excrement absorbed in the absorbent layer to the sheet surface side can be prevented by using absorbent resin having the liquid absorption speed of 18 seconds or shorter.

Further, the second absorbent layer may be formed of an absorbent resin having a desired liquid absorption speed, or it may be formed by combining a plurality of absorbent resins having different liquid absorption speeds such that the second absorbent layer has a desired liquid absorption speed as a whole.

The present invention is not limited to the above-described embodiments, but rather, may be added to, changed, replaced with alternatives or otherwise modified.

In the embodiments, the absorbent layer is described as having the first absorbent layer formed of hydrophilic fibers containing a cationic surfactant and the second absorbent layer formed of absorbent resin (SAP), but it may have only the first absorbent layer.

As the cationic surfactant which imparts hydrophobicity to the hydrophilic fibers, various kinds of such cationic surfactants can be used.

As the hydrophilic fibers, various fibers other than pulp may also be used.

The position of the second absorbent layer with respect to the first absorbent layer and the number of the second absorbent layers can be appropriately selected. For example, the second absorbent layers can be disposed on and underneath the first absorbent layer, or on and inside the first absorbent layer.

As the bonding method, a bonding method other than the method using the heat sealable adhesive (hot-melt adhesive) can also be used.

Description of the Numerals

| | |
|---|---|
| 10, 110 | pet sheet |
| 20, 120 | absorber |
| 21, 121, 321 | first absorbent layer |
| 22, 122, 322 | second absorbent layer |

| 23, 123, 323 | top side covering sheet |
| 24, 124, 324 | back side covering sheet |
| 30, 130 | top sheet |
| 40, 140 | back sheet |
| 50, 51, 52, 53, 54, 150, 151, 152, 153 | bonded part |
| 60 | placing surface |

**Claims**

1. A sheet for pets comprising a liquid-permeable top sheet, a liquid-impermeable back sheet, and an absorber that is disposed between the top sheet and the back sheet and absorbs excrement which has penetrated the top sheet, the sheet for pets being configured such that the top sheet receives excrement of pets with the back sheet placed on an intended place, wherein:

    the absorber has an absorbent layer which is formed of hydrophilic fibers containing a cationic surfactant.

2. The sheet for pets as defined in claim 1, wherein the cationic surfactant comprises quaternary ammonium salt.

3. The sheet for pets as defined in claim 1 or 2, wherein pulp is used as the hydrophilic fibers.

4. The sheet for pets as defined in any one of claims 1 to 3, wherein the hydrophilic fibers forming the absorbent layer have a sedimentation speed of 5 seconds or longer.

5. The sheet for pets as defined in any one of claims 1 to 4, wherein the absorbent layer is formed of hydrophilic fibers containing a cationic surfactant and absorbent resin.

6. The sheet for pets as defined in claim 5, wherein the absorbent layer includes a first absorbent layer formed of hydrophilic fibers containing a cationic surfactant, and a second absorbent layer formed of absorbent resin.

7. The sheet for pets as defined in claim 6, wherein the second absorbent layer is disposed on a side of the first absorbent layer facing the top sheet.

8. The sheet for pets as defined in claim 6 or 7, wherein the absorbent resin forming the second absorbent layer has a liquid absorption speed by a vortex method of 18 seconds or shorter.

9. The sheet for pets as defined in any one of claims 1 to 8, wherein at least the top sheet and the absorbent layer are entirely bonded together by a heat sealable adhesive.

FIG. 1

FIG. 2

FIG. 3

FIG. 4

FIG. 5

## INTERNATIONAL SEARCH REPORT

| International application No. |
|---|
| PCT/JP2013/067009 |

**A. CLASSIFICATION OF SUBJECT MATTER**
*A01K1/015*(2006.01)i

According to International Patent Classification (IPC) or to both national classification and IPC

**B. FIELDS SEARCHED**

Minimum documentation searched (classification system followed by classification symbols)
A01K1/015

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-232685 A (Lion Corp.), | 1-6 |
| Y | 15 October 2009 (15.10.2009), entire text; drawings (Family: none) | 7-9 |
| Y | JP 2008-43243 A (Sanotec Co., Ltd.), 28 February 2008 (28.02.2008), entire text; drawings (Family: none) | 7 |
| Y | JP 2005-198598 A (Uni-Charm Petcare Corp.), 28 July 2005 (28.07.2005), entire text; drawings & US 2005/0166855 A1 & EP 1554927 A1 & DE 602004013710 D & KR 10-2005-0075714 A & CN 1644037 A & AT 394920 T & ES 2305673 T & AU 2005200168 A | 8,9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 September, 2013 (17.09.13) | 24 September, 2013 (24.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 870 865 A1**

<table>
<tr><td colspan="2"><strong>INTERNATIONAL SEARCH REPORT</strong></td><td>International application No.<br>PCT/JP2013/067009</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2011-205984 A  (Uni-Charm Corp.),<br>20 October 2011 (20.10.2011),<br>entire text; drawings<br>& EP 2552193 A          & WO 2011/121682 A<br>& WO 2011/121682 A1     & AU 2010349863 A<br>& CA 2794468 A          & CN 102821599 A<br>& KR 10-2013-0008056 A  & MX 2012011194 A<br>& EA 201201194 A | 1-9 |

Form PCT/ISA/210 (continuation of second sheet) (July 2009)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011205984 A